Europäisches Patentamt

(19) European Patent Office

Office européen des brevets

(11) Numéro de publication: **0 219 414**
**B1**

(12) **FASCICULE DE BREVET EUROPEEN**

(45) Date de publication du fascicule du brevet: **12.12.90**

(21) Numéro de dépôt: **86402163.9**

(22) Date de dépôt: **02.10.86**

(51) Int. Cl.⁵: **B 01 J 41/04,** B 01 J 49/00, C 02 F 1/42

(54) **Perfectionnement à la régénération d'un lit de résine échangeuse d'ions pour l'élimination des nitrates de l'eau.**

(30) Priorité: **15.10.85 FR 8515246**

(43) Date de publication de la demande:
**22.04.87 Bulletin 87/17**

(45) Mention de la délivrance du brevet:
**12.12.90 Bulletin 90/50**

(84) Etats contractants désignés:
**AT BE CH DE GB IT LI NL**

(56) Documents cités:
**DE-A-3 301 054**
**FR-A-1 512 912**
**FR-A-2 005 248**
**US-A-3 313 726**
**US-A-4 479 877**

(73) Titulaire: **OTV OMNIUM de TRAITEMENTS et de VALORISATION**
**Le Doublon 11 avenue Dubonnet**
**F-92407 Courbevoie (FR)**

(72) Inventeur: **Philipot, Jean-Marc**
**14 chemin des Bourgognes**
**F-95000 Cergy (FR)**

(74) Mandataire: **Cuer, André**
**CABINET CUER 30, rue de Léningrad**
**F-75008 Paris (FR)**

Courier Press, Leamington Spa, England.

# Description

La présente invention a trait au domaine du traitement des eaux et, spécifiquement, de l'élimination des ions nitrates de leau. Elle concerne plus particulièrement, lors de la mise en oeuvre de résines échangeuses d'ions pour favoriser cette élimination, un procédé permettant de réduire le taux de régénération de résines anioniques et de diminuer notablement la quantité de chlorure de sodium, ou produit équivalent, utilisé pour la régénération.

On a mis en évidence depuis un certain nombre d'années les risques sanitaires -notamment, des méthémoglobinémies et certains cancersliés à la présence de nitrater dans les unités de distribution d'eau et dont les teneurs ont augmenté avec l'essor de l'agriculture et de l'élevage industriel. Dans la législation de nombreux pays industriels, des directives ont été émises pour fixer des concentration maximales admissibles. Par exemple, en France, cette concentration ne doit pas dépasser 50 mg/l à partir d'août 1985, la valeur-guide à adopter étant de l'ordre de 25 mg/l.

Deux principaux types de traitement de la pollution des eaux par les nitrates ont été développés jusqu'a ce jour. Selon le procédé dit biologique où les nitrates sont utilisés pour oxyder un substrat carboné, comme par exemple l'éthanol dans le procédé BIODENIT (marque déposée) de la Demanderesse, alors que l'on élimine l'azote gazeux, la dénitrification est opérée par des bactéries hétérotrophes qui, en milieu anoxique, utilisent l'oxygène des nitrates pour oxyder un substrat carboné et tirent de cette oxydation l'énergie nécessaire à la synthèse de nouvelles cellules. Conformément à un autre groupe de techniques et selon un procédé physico-chimique, l'élimination des nitrates se fait par échange d'ions et l'on utilise alors une résine synthétique aninique où les ions nitrates, ansi d'ailleurs que les ions sulfates, bicarbonates ou autres anions, sont échangés contre les anions du régénérant (chlorure ou autre) selon la séquence classique d'une phase d'épuisement où les nitrates sont fixés sur les grains de résine et une phase de régénération où les nitrates sont déplacés par les anions du régénérant, comme par exemple les chlorures d'ne saumure concentrée de NaCl ou autre anion d'un égénérant approprié.

Ce procédé d'élimination des nitrates par échane d'ions donne généralement satisfaction. En revanche, les saumures concentrées, utilisées pour l'élution des nitrates, contribuent à l'enrichissement salin du milieu naturel, ce qui entraîne de sériux inconvénients au plan écologique. Il importe donc de mettre au point et de bien maîtriser une technologie de régénération permettant tout à la fois de conserver à la résine son efficacité et de réduire la quantité de sel régénérant mis en oeuvre. Par ailleurs, il est important de noter que, le marché de la dénitratation s'appliquant principalement à de petites installations rurales, la simplificité d'exploitation doit être un objectif majeur.

Pour effectuer ladite régénération, deux techniques sont essentiellement utilisées: le système à co-courant où la régénération et l'épuisement son réalisés dans le même sens d'écoulement au travers du lit de résine, généralement le sens gravitaire; et le système à contrecourant où la régénération est effectuée à contre-courant de l'épuisement, les flux pouvant circuler de façon ascendante ou descendante, alors que le lit de résine doit rester fixe.

Dans la régénération à contre-courant on effectue: une extraction périodique d'une fraction de volume de résine pour éliminer les fines particules dans une installation annexe; une régénération à contre-courant de l'épuisement par la saumure concenttrée; puis un déplacement à contre-courant de la saumure et un rinçage à contre-courant, ces deux dernières phases devant être obligatoirement réalisées avec de l'eau traitée, ce qui implique généralement la nécessité d'une installation annexe de stockage d'eau traité. Un tel procédé donne généralement de bons résultats dans la dénitrification et permet d'atteindre l'objectif précité de réduction de la quantité de sel régénérant mis en oeuvre. Toutefois il nécessite deux ouvrages annexes à l'installation d'échange d'ions, ce qui alourdit de façon sensible les coûts d'investissement et d'exploitation et rend la mise en oeuvre difficile pour de modestes installations rurales de traitement. Selon d'autres systèmes de régénération à contre-courant, on utilise des réservoirs superposés ou d'autres agencements qui rendent toujours l'installation compliquée et difficile à exploiter.

Selon la régénération à co-courant, les phases de traitement consistent: en une expansion de la résine (de 50 à 100%) pour détasser le lit qui a tendance à se compacter pendant l'épuisement et pour éliminer les particules retenues en surface, provenant des matière en suspension de l'eau à traiter ou formées par attrition et usure de la résine; puis une percolation de saumure concentré à co-courant gravitaire du flux d'épuisement; un déplacement de la saumure à co-courant et un rinçage à co-courant; les différentes phases puovant être faites indifféremment à l'eau traitée ou à l'eau non traitée sans répercussion sensible sur la qualité de l'eau traitée au redémarrage du cycle d'épuisement.

Si, dans cette technique à co-courant, l'installation à mettre en oeuvre est beaucoup plus simple et plus facile à exploiter, la consommation en saumure est par contre très importante et atteint des taux, lors de la régénération, qui souvent ne sont pas supportables pour l'environnement et rendent l'exploitation coûteuse. En effet, lors de l'élution pr le régénérant, il se créé à l'intérieur du lit de résine un gradient de rétention des anions d'autant plus marqué que le taux de régénération est plus faible: du fait que les anions nitrates sont élués plus difficilement ue les sulfates et les bicarbonates, ils restent fixés à la base du lit de la résine et, lors du re-démarrage en phase dépuisement, ces nitrates sont déplacés par les sulfates, ce qui se traduit par une fuite importante en nitrates.

De ce fait on ne peut réduire le taux de régénération à une valeur inférieure à 400% de la quantité stoechiométrique normalement nécessaire soit, par exemple environ 240 g de NaCl par litre de résine.

On a divulgué, certes, dans un procédé d'élimination des nitrates dans une eau chargée en sulfates, la possibilitié de réaliser des économies en régénérant grâce à un régénération partielle, par exemple jusqu'au point où 10% environ des nitrates absorbés restent à l'intérieure du lit de résine (US—A—4479877).

L'un des buts essentiels de l'invention est précisément de réduire considérablement la quantité de sel à utiliser lors de la régénération, tout en utilisant les avantages de la simplicité de la technique précitée du co-courant.

Selon la caractéristique principale du procédé de l'invention, la phase finale de rinçage dans le processus de régénération, conformément au système à co-courant, est suivie d'une homogénéisation par mélange des grains de résine anionique. Il a en effet été trouvé qu'un brassage soigné du lit de résine permettait de ramener dans les couches inférieures de celui-ci des grains parfaitement régénéres qui jouent alors un rôle de finition dans la régénération du lit en permettant de supprimer la stratification du lit et de réduire la fuite en ions nitrates, à une valeur inférieure à la norme, lors du redémarrage du cycle d'épuisement.

Le mélange des grains de résine peut être effectué de diverses façons. Selon un mode avantageux on effectue un brassage énergique du lit avec de l'air surpressé, par exemple à 0,04—0,6 mégaPascal. Conformément à une variante d'exécution, on peut assurer une injection d'eau en un ou plusieurs points du lit de résine pour créer des mouvements tourbillonnaires. Dans d'autres cas, le brassage peut être effectué par recyclage au moyen de pompage de l'eau, ou encore par agitateur mécanique ou hydroéjecteur, et, de façon générale, par tout système connu d'agitation.

Dans la mise en oeuvre du procédé, les autres phases du processus de régénération sont les mêmes que celles précitées dans la technique à co-courant, si bien que le déroulement séquentiel s'analyse comme suit: expansion du lit, envoi à co-courant de l'épuisement de saumure concentrée, déplacement de la saumure à co-courant, rinçage à co-courant puis, conformément à l'invention, mélange du lit de résine. Comme dans le système à co-courant classique, l'utilisation d'eau non traitée pour les phases de rinçage et déplacement de la saumure ne nuit pas à la qualité du traitement.

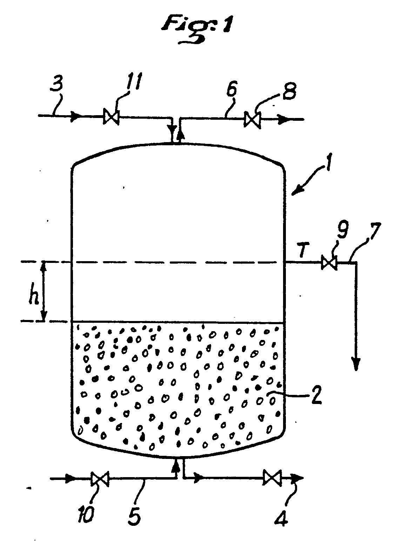

En pratique, l'installation conventionnelle de dénitrification par échange d'ions avec régénération à co-courant et brassage du lit de résine est équipée de canalisations supplémentaires pour des sorties et entrées d'air ainsi que d'un système de vidange partielle. Un appareil de traitement conforme à l'invention est schématisé à titre d'exemple non limitatif sur la figure 1 annexée où l'on peut voir que le réacteur 1, muni de sa résine anionique 2, est équipé dans le but susvisé de mélange ici à l'air: l'entrée 3 d'eau à traiter, de la sortie 4 d'eau traitée, de la canalisation 5 d'arrivée de l'air de brassage, de la sortie 6 de cet air et de la canalisation 7 de vidange partielle de l'appareil.

La procédure utilisée de mélange à l'air comprend trois phases en séquences distinctes, à savoir:

une mise à niveau: l'appareil 1 est tout d'abord isolé par fermeture de toutes les vannes; puis on ouvre les vannes 8 et 9 pour vidanger partiellement l'appareil jusqu'à un niveau h au-dessus du lit de résine et correspondant à la tubulure 7; la fin de séquence correspnd à l'arrêt de l'écoulement;

un mélange à l'air surpressé: après fermeture de la vanne 9, l'air de brassage est admis par la vanne 10 sous une pression d'environ 0,04 à 0,06 mégaPascal (MPa) pendant environ cinq minutes; l'air s'échappe ensuite dans l'atmosphère par la vanne 8; l'espace disponible entre le plan d'eau et le fond supérieur de l'appareil permet aux bulles d'air d'éclater et de se dégager sans entrainement intempestif de résine à l'égout;

le remplissage en eau: après brassage puis fermeture de la vanne 10, la résine décante rapidement sans que le classement granulométrique des grains soit sensiblement modifié; l'appareil est ensuite rempli d'eau par ouverture de la vanne 11. La vanne 8, ouverte pour permettre l'évacuation de l'air conenu dans l'appareil, est fermée en fin d'opération lorsque de l'eau apparait à la décharge.

Bien entendu, la hauteur h ainsi que le débit d'air de brassage et la durée du mélange constituent des paramètres qui varient, et peuvent être déterminés par l'homme de l'art, en fonction de la dimension et de la géométrie des appareils de traitement par échange d'ions.

Exemples de réalisation

Afin de pouvoir mettre en évidence l'économie en sel régénérant réalisée par la mise en oeuvre du procédé selon l'invention, on s'est livré à une étude comparative des techniques de régénération connues à contre-courant et à co-courant avec la technique perfectionnée à co-courant telle que décrite pour un appareil du type figure 1.

L'eau était traitée à un débit de 200 m3/h sur vingt heures de fonctionnement et renfermait: 60 ppm (parties par million) d'ions nitrates, 40 ppm d'ions sulfates et 260 ppm d'ions bicarbonates. La teneur finale souhaitée pour les nitrates était fixée à 15 ppm.

Dans le cas de la régénération en processus à contre-courant, la fuite en nitrates étant sensiblement nulle, il suffisait de traiter 75% du débit d'eau, que l'on pouvait donc mélanger à 25% d'eau brute. Le taux de régénération était de 1,5 équivalent de NaCl par litre de résine (soit 50% de pus que la stoechiométrie) et la capacité de la résine pour les nitrates était de l'ordre de 250 milliéquivalents/1 de résine. Le volume de résine correspondant au maximum calculé sur la base d'un cycle régénération/épuisement de 24 heures et tenant compte des pertes en eau pour la régénération et de l'usure de la résine, était d'environ 13 m3. Ainsi le poids de NaCl à utiliser était de 1 188 Kg par 24 heures.

Dans le mode opératoire comparatif selon le système co-courant classique, le taux de régénération était de 4 équivalents de NaCl/litre de résine (soit 4 fois la stoechiométrie) pour un volume de résine, calculé comme dit ci-dessus, de 10,5 m3. On arrivait ainsi à un poids de NaCl à utiliser de 2 520 Kg/24 h. Du fait que le quart pouvait être recyclé, on devait se baser sur une consommation journalière de 1 890 Kg.

Enfin, en opérant selon l'invention sur le principe du co-courant perfectionné, on pouvait traiter la totalité du débit en se basant sur une fuite en nitrates d'environ 15 ppm à la sortie de l'appareil. Le taux de régénération était de 1,5 équivalent de NaCl/1 de résine et la capacité de la résine pur les nitrates de 250 m illiéquivalents/1 de résine. Le volume de résine à utiliser était de l'ordre de 13 m3 dans cet exemple de réalisation. On arrivait alors à un poids de chlorure de sodium à utiliser de 1 170 Kg/24 heures. Le volume de résine povait être ramené à 10 m3 à condition de raccourcir les cycles entre deux régénérations (par exemple, 18h30 au lieu de 24h) sans pour autant dépenser plus de sel régénérant.

Ainsi, comme on peut le voir, la mise en oeuvre du procédé selon l'invention a permis de réduire de près de 40% la quantité de NaCl par rapport à la technique conventionnelle du co-courant. La quantité finale était du même ordre que celle utilisée dans le processus à contre-courant mais avec l'avantage d'une simplicité d'appareil et d'un coût d'exploitation beaucoup plus faible.

En exprimant les poids de chlorure de sodium utilisés pour la régénération, par rapport au poids des nitrates éliminés, on peut établir la comparaison suivante

contre-courant: 6,6 Kg de NaCl/Kg de NO3
co-courant classique: 10,5 Kg de NaCl/Kg de NO3
co-courant selon l'invention: 6,5 Kg de
NaCl/Kg de NO3

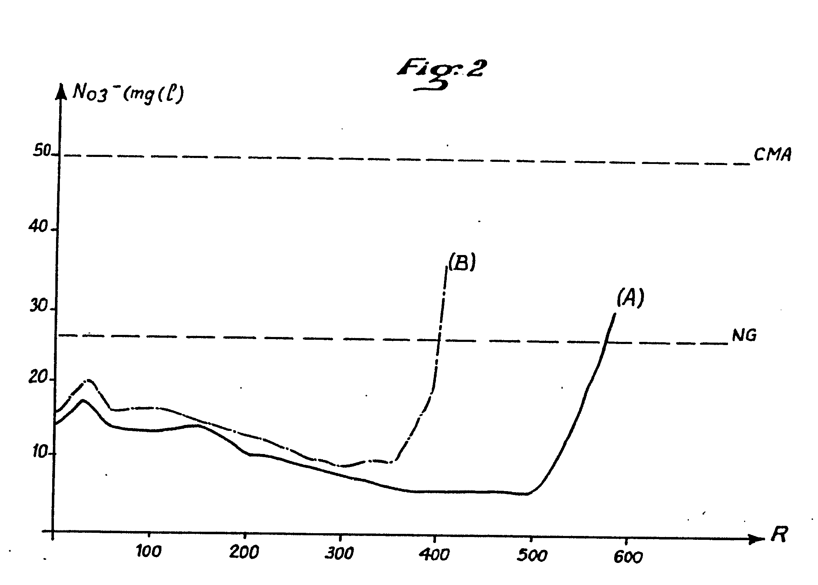

A titre illustratif, on a tracé sur la figure 2 annexée les courbes d'épuisement lors de la mise en oeuvre du procédé de l'invention, ceci pour un taux de régénération de 1,5 équivalent/1 de résine. Les courbes indiquent la concentration en NO3 (mg/l) par rapport au rapport R de volume d'eau traité pa volume de résine. La coure A correspond au traitement d'une eau brute contenant 50 mg/l au départ d'ions nitrates alors que la courbe B reflète le cas d'une eau qui renfermait 100 mg/l d'ions nitrates. La droite horizontale CMA correspond à la "concentration maximale admissible" et la droite NG au "niveau guide" selon les recommandations citées en début de description (directive CEE/80/778 du 15/07/1980).

Comme on peut le voir sur ce graphique, le taux d'élimination des nitrates selon le procédé de l'invention était inférieur au NG pendant la durée du cyle d'épuisement. Le niveau de fruites en nitrates, représente par les remontées à la verticale des courbes A et B et fonction du taux de régénération appliqué. En choisissant une valeur de nitrate souhaitée pour une eau traitée, on peut alors ajuster le taux de régénération en conséquence: ceci évite les inconvénients du by-pass, nécessaire dans le cas du contre-courant ou du co-courant classique, et simplifie donc encore les problèmes d'exploitation, tout en apportant une réduction sensible du sel régénérant utilisé.

**Revendications**

1. Procédé d'élimination des nitrates de l'eau de consommation par échange d'ions sur résine anionique, du type selon lequel le lit de résine, après épuisement, est régénére à co-courant du flux d'épuisemente selon des phases successives: d'expansion de la résine pour détasser le lit, de percolation de saumure concentrée ou autre régénérant approprié, puis de rinçage, également à co-courant, le procédé étant caractérisé en ce que la phase de rinçage est suivie d'une homogénéisation par mélange des grains de résine anionique afin de raumener dans les couches inferieures du lit de resine des Grains parfaitement régénéres.

2. Procédé selon la revendication 1 caractérisé en ce que le mélange est effectué par un brassage à l'air surpressé.

3. Procédé selon l'une quelconque des revendications 1 ou 2, caractérisé en ce que ledit mélange est efectué après vidange du reacteur (1) contenant la à résine jusqu'à un certain niveau (h) audessus du lit de résine correspndant à une fin de séquence d'écoulement d'eau et avant remplissage en eau de l'échangeur pour nouveau traitement d'échange d'ions.

4. Procédé selon l'une quelconque des revendications 1 ou 2, caractérisé en ce que l'on utilise, pour le mélange des grains, de l'air comprimé à 0,04—0,06 mégaPascal.

5. Procédé selon la revendication 1, caractérisé en ce que le mélane de la résine est obtenu par injection d'un courant d'eau en un ou plusieurs points du lit.

6. Procédé selon la revendication 1, caractérisé en ce que le mélange de la résine est obtenu par agitation mécanique ou hydroéjecteur.

**Patentansprüche**

1. Verfahren zur Entfernung von Nitraten aus Leitungswasser durch Ionenaustausch an einem anionischen Harz, bei dem nach dessen Aufbrauch das Harzbett durch nacheinanderfolgende, in der gleichen Richtung wie der das Harzbett verbrauchende Strom fliessende Phasen regeniert wird: eine eine Ausdehnung des Harzes bewirkende Phase zur Auflockerung des Bettes, eine Phase zur Auslaugung mit konzentrierter Salzlösung oder mit einem anderen geeigneten Mittel, dann eine ebenfalls in Gleichströmung stattfindende Ausspülphase, wobei das Verfahren dadurch gekennzeichnet ist, daß auf die Ausspülphase eine das Mischen des anionischen Harzes bewirkende Homogenisierung folgt, um vollkommen regenerierte Körner in die unteren Schichten des Bettes zu verbringen.

2. Verfahren nach Anspruch 1, dadurch gekennzeichnet, daß das Mischen durch Rühren mittels Druckluft erfolgt.

3. Verfahren nach Anspruch 1 oder 2, dadurch gekennzeichnet, daß das Mischen nach der Entleerung des das Harz enthaltenden Reaktors (1) bis auf eine bestimmte, oberhalb des Harzbettes, dem Ende einer Etappe des Abfliessens von Wasser entsprrechenden und vor der Wiederauffüllung mit Wasser des Austauschers für eine neuerliche Anionaustauschbehandlung benötigte Höhe (h).

4. Verfahren nach einem der Ansprüche 1 und 2, dadurch gekennzeichnet, daß zum Mischen der Körner Druckluft unter einem Druck von 0.04 bis 0.06 megaPascal verwendet wird.

5. Verfahren nach Anspruch 1, dadurch gekennzeichnet, daß das Mischen des Harzes durch die Einführung eines Luftstromes an einer oder mehreren Stellen des Bettes erfolgt.

6. Verfahren nach Anspruch 1, dadurch gekennzeichnet, daß das Mischen des Harzes durch mechanisches oder mittels eines Hydroejektors erfolgendes Rühren bewirkt wird.

**Claims**

1. Process for eliminating nitrates from drink water by an anion exchange resin bed wherein the resin bed, after depletion of the resin, is regenerated cocurrent to the depletion flow according the successive phases: expansion of the resin to loosen the bed, percolation of concentrated brine or other suitable regenerating agent, then cocurrent rinsing of the bed, the process being characterized in that the rinsing phase is followed by an homogenization with mixing of the anionic resin grains in order to bring back thoroughly regenerated grains in the lower layers of the resin bed.

2. Process according the claim 1 wherein the mixing is performed by mixing with air under excess pressure.

3. Process according anyone of the claims 1 or 2, wherein the mixing is performed after emptying of the reactor (1) containing the resin to a certain level (h) above the resin bed, the level corresponding to an end of water flow sequence and before filling the exchange with water for a new ion-exchange treatment.

4. Process recording the claims 1 or 2, wherein air compressed to 0,04—0,06 megaPascal is used for mixing the grains.

5. Process according the claim 1, wherein the mixing of the resin is obtained by injection of a stream water at one or more points of the bed.

6. Process according the claim 1, wherein the mixing of the resin is effected by mechanical agitation or hydroejector.

## Fig. 1

Fig. 2

EP 0 219 414 B1